# EUROPÄISCHE PATENTSCHRIFT

(11) **EP 2 844 710 B1**
(45) Veröffentlichungstag und Bekanntmachung des Hinweises auf die Patenterteilung: **06.06.2018**
(21) Anmeldenummer: 13719844.6
(22) Anmeldetag: 30.04.2013
(51) Int. Cl.: C09D 11/02, C09D 11/08, C09D 11/10

(54) **OFFSETDRUCKFARBE ODER OFFSETDRUCKLACK**
OFFSET PRINTING INK OR OFFSET PRINTING VARNISH
PEINTURE POUR UNE IMPRESSION OFFSET OU LAQUE POUR UNE IMPRESSION OFFSET

(30) Priorität: 02.05.2012 DE 102012103825
(43) Veröffentlichungstag der Anmeldung: 11.03.2015
(73) Patentinhaber: Epple Druckfarben AG, 86356 Neusäss-Augsburg (DE)
(72) Erfinder: EPPLE, Carl, 86150 Augsburg (DE); EISELE-KOHLER, Artur, 86161 Augsburg (DE)
(74) Vertreter: Hoeger, Stellrecht & Partner Patentanwälte mbB
(86) Internationale Anmeldenummer: PCT/EP2013/059008
(87) Internationale Veröffentlichungsnummer: WO 2013/164347

(56) Entgegenhaltungen:
- EP-A1- 1 739 142
- WO-A1-2008/024968
- DE-A1- 19 653 828
- GB-A- 1 007 705
- US-A- 3 052 552
- US-A- 3 258 347
- US-A1- 2002 152 927
- US-A1- 2005 061 184

## Beschreibung

Die vorliegende Erfindung betrifft eine Offsetdruckfarbe oder einen Offsetdrucklack, umfassend mindestens ein Bindemittel und ggf. mindestens ein Farbmittel.

Offsetdruckfarben und -drucklacke werden in großem Umfang zum Bedrucken von Lebensmittelverpackungen eingesetzt, beispielsweise zum Bedrucken von Lebensmittelverpackungen in Form von Faltkartons im Bogenoffsetverfahren. Druckfarben und Drucklacke, die für diesen Anwendungsbereich zugelassen sind, müssen bestimmte Voraussetzungen erfüllen, damit eine Kontamination des verpackten Lebensmittels durch potenziell gesundheitsschädliche Bestandteile der Druckfarbe oder des Drucklacks ausgeschlossen werden kann. Insbesondere gibt es Grenzwerte für die maximal zulässige Menge an Bestandteilen, die von der bedruckten Außenseite der Verpackung nach innen, d.h. in Richtung des Lebensmittels, hindurchtreten dürfen. Dieses Phänomen wird als Migration bezeichnet.

Offsetdruckfarben umfassen ein oder mehrere Farbmittel, in der Regel Pigmente, sowie ein oder mehrere Bindemittel, welche die Farbmittel unter Ausbildung eines Films an die Oberfläche des Bedruckstoffs binden (Offsetdrucklacke enthalten demgegenüber keine Farbmittel und werden z.B. eingesetzt, um eine zusätzliche Schutzschicht über der Druckfarbe zu bilden). Das oder die Bindemittel umfassen ihrerseits einen oder mehrere Harzbestandteile sowie ein Lösemittel, welches in der Druckfarbe oder dem Drucklack die Harzbestandteile löst und die Viskosität auf das erforderliche Maß verringert, wobei das Lösemittel nach dem Druckvorgang eine physikalische und/oder chemische Trocknung der Druckfarbe oder des Drucklacks ermöglicht, indem es z.B. verdunstet, vom Bedruckstoff aufgesaugt wird oder einer oxidativen Vernetzung unterliegt. Da das Lösemittel in jedem Fall von allen Bestandteilen der Druckfarbe oder des Drucklacks die mit Abstand höchste Flüchtigkeit aufweist, trägt es ganz wesentlich oder sogar ausschließlich zur Migrationsproblematik bei, sodass sich bei der Entwicklung von Offsetdruckfarben und -drucklacken, die für Lebensmittelverpackungen geeignet sind, die bisherigen Überlegungen auf die Auswahl von geeigneten Lösemitteln beschränken.

So wird beispielsweise in der DE 10 2007 012 264 A1 eine Druckfarbe oder ein Drucklack für Lebensmittelverpackungen vorgeschlagen, umfassend ein Bindemittel mit einem Harzbestandteil und einem Lösemittelbestandteil, wobei das Lösemittel oder die Komponenten des Lösemittels ein Lebensmittel oder Lebensmittelzusatzstoff sind. Ein Kontakt des verpackten Lebensmittels mit dem migrierenden Lösemittel ist in diesem Fall gesundheitlich unbedenklich, da es sich bei dem Lösemittel um eine Komponente handelt, die selbst in Lebensmitteln eingesetzt werden kann.

Trotz dieser Entwicklungen dürfen Offsetdruckfarben und -drucklacke grundsätzlich nur zum Bedrucken der Außenseite von Lebensmittelverpackungen verwendet werden, d.h. die Druckfarben und Drucklacke dürfen insbesondere nicht in einen direkten Kontakt mit dem Lebensmittel gelangen, da in diesem Fall eine Kontamination des Lebensmittels nicht nur mit dem Lösemittel, sondern auch mit allen anderen Bestandteilen der Druckfarbe oder des Drucklacks erfolgen kann, insbesondere mit dem oder den Farbmitteln und Bindemitteln. Die aus dem Stand der Technik bekannten Offsetdruckfarben und -drucklacke enthalten jedoch stets auch Bestandteile, die potenziell gesundheitsschädlich sind, oder deren gesundheitliche Auswirkungen unbekannt sind.

DE 196 53 828 A1 offenbart migrations-, geruchs- und swellingarme Bogenoffsetdruckfarben, die als Lösungsmittel einen oder mehrere Fettsäureester von mehrwertigen Alkoholen mit hohem sterischem Raumbedarf und/oder von Ethinolen enthalten.

US 2005/0061184 A1 offenbart essbare Farbzusammensetzungen, die pflanzliche Pigmente enthalten.

US 3,052,552 offenbart ein Verfahren zum Bedrucken von Süßwaren mit einer Zusammensetzung umfassend ein Farbmittel, ein Trägermedium, ein Harzbindemittel und Lecithin.

GB 1 007 705 offenbart ein Verfahren zum Bedrucken von Süßwaren mit einer essbaren, schnelltrocknenden Zusammensetzung umfassend ein Farbmittel, ein Trägermedium, ein Bindemittel und ein Netzmittel.

EP 1 739 142 A1 offenbart ein Verfahren zur Herstellung einer Harzzusammensetzung auf Basis von modifiziertem Kolophoniumester zur Verwendung in einem lipographischen Firniss.

US 2002/0152927 A1 offenbart eine essbare Druckfarbe mit einer Viskosität von ca. 3.000 bis ca. 16.000 cP bei 25 °C.

US 3,258,347 offenbart eine essbare Farbzusammensetzung zur Beschriftung von wachsbeschichteten pharmazeutischen Tabletten, umfassend gereinigten Schellack, Ethanol, Propylenglycol und ein Farbmittel.

WO 2008/024968 A1 offenbart lebensmittelsichere Offsetdruckfarben, die als Lösemittel mindestens ein Triglycerid mit gesättigten Monocarbonsäureresten umfassen.

Der Erfindung liegt daher die Aufgabe zugrunde, eine Offsetdruckfarbe oder einen Offsetdrucklack vorzuschlagen, die/der für einen direkten Kontakt mit Lebensmitteln geeignet ist.

Diese Aufgabe wird durch eine Offsetdruckfarbe oder durch einen Offsetdrucklack gemäß Anspruch 1 gelöst.

Laut Artikel 2 der genannten Verordnung Nr. 178/2002 sind Lebensmittel alle Stoffe oder Erzeugnisse, die dazu bestimmt sind, oder von denen nach vernünftigem Ermessen erwartet werden kann, dass sie in verarbeitetem, teilweise verarbeitetem oder unverarbeitetem Zustand von Menschen aufgenommen werden. Lebensmittelzusatzstoffe sind laut Artikel 3(2)a) der genannten Verordnung Nr. 1333/2008 Stoffe mit oder ohne Nährwert, die in der Regel weder selbst als Lebensmittel verzehrt noch als charakteristische Lebensmittelzutat verwendet werden, und einem Lebensmittel aus technologischen Gründen bei der Herstellung, Verarbeitung, Zubereitung, Behandlung, Verpackung, Beförderung oder Lagerung zugesetzt werden, wodurch sie selbst oder ihre Nebenprodukte mittelbar oder unmittelbar zu einem Bestandteil des Lebensmittels werden oder werden können.

Somit handelt es sich bei sämtlichen Bestandteilen der erfindungsgemäßen Offsetdruckfarbe oder des -drucklacks, also insbesondere bei dem mindestens einen Farbmittel und dem mindestens einen Bindemittel, aber auch bei allen weiteren Bestandteilen wie Hilfs- und Füllstoffen, um Stoffe oder Zusammensetzungen, die per gesetzlicher Definition für den menschlichen Verzehr vorgesehen und geeignet sind, und deren gesundheitliche Unbedenklichkeit, zumindest innerhalb bestimmter Mengen, außer Frage steht. Somit wäre auch ein Verzehr der erfindungsgemäßen Druckfarbe oder des Drucklacks insgesamt prinzipiell unbedenklich, zumindest in den relativ geringen Mengen, die bei einem direkten Kontakt der Druckfarbe oder des Drucklacks mit einem Lebensmittel auf dieses übertragen werden könnten.

Praktische Anwendungen, die mit der erfindungsgemäße Druckfarbe oder dem Drucklack im Gegensatz zu den bisher bekannten Offsetdruckfarben für den Verpackungsdruck ermöglicht werden, sind beispielsweise das Bedrucken der Innenseite von Lebensmittelverpackungen, was insbesondere bei bestimmten Verpackungen für Süßwaren von Interesse sein kann (z.B. bei Adventskalendern), sowie das Aufbringen von bedruckten Etiketten direkt auf die Oberfläche von Lebensmitteln (z.B. bei Brotmarken). Es ist im Rahmen der Erfindung sogar möglich, Lebensmittel direkt im Offsetverfahren zu bedrucken, z.B. dünne Teigoblaten, die als Esspapier bekannt sind.

Bei den Lebensmittelzusatzstoffen, die im Rahmen der vorliegenden Erfindung eingesetzt werden, handelt es sich insbesondere um diejenigen, die in Anhang II der Verordnung (EG) Nr. 1333/2008 des Europäischen Parlaments und des Rates, geändert durch die Verordnung (EU) Nr. 1129/2011 der Kommission, oder in den Anlagen 1 bis 7 der deutschen Verordnung über die Zulassung von Zusatzstoffen zu Lebensmitteln zu technologischen Zwecken (ZZulV) aufgeführt sind. Die in den genannten Verordnungen aufgeführten Stoffe und Zusammensetzungen sind aufgrund ihrer nachgewiesenen Unbedenklichkeit zumindest innerhalb der Europäischen Union für die Verwendung in Lebensmitteln zugelassen. Alle in der EG-Verordnung Nr. 1333/2008 aufgeführten Lebensmittelzusatzstoffe haben eine eindeutig zuordenbare E-Nummer. Die deutsche ZZulV führt zusätzlich einige weitere Stoffe ohne E-Nummern auf, die jedoch gleichermaßen zur Verwendung in Lebensmitteln zugelassen sind.

Des Weiteren können für die erfindungsgemäße Offsetdruckfarbe oder den -drucklack auch Lebensmittelzusatzstoffe verwendet werden, die in einem anderen Land, z.B. in den USA, aufgrund ihrer nachgewiesenen Unbedenklichkeit als solche zugelassen sind.

Bei der Auswahl der Bestandteile einer Offsetdruckfarbe oder eines Offsetdrucklacks muss darauf geachtet werden, dass einerseits die Druckfarbe oder der Drucklack vor und während des Druckvorganges die erforderlichen Eigenschaften aufweisen (insbesondere rheologische Eigenschaften wie Viskosität, Klebrigkeit usw.), und dass andererseits auch das Druckergebnis zufrieden stellend ist (z.B. hinsichtlich Trocknungszeit, Scheuerfestigkeit usw.). Es hat sich überraschenderweise gezeigt, dass in dieser Hinsicht Offsetdruckfarben oder -drucklacke mit zufrieden stellenden Eigenschaften hergestellt werden können, auch wenn die Auswahl der Bestandteil auf Lebensmittel und Lebensmittelzusatzstoffe, insbesondere auf die in den oben genannten Verordnungen aufgeführten Lebensmittelzusatzstoffe, beschränkt ist.

Im Fall der erfindungsgemäßen Offsetdruckfarbe ist es bevorzugt, wenn diese als Farbmittel ein oder mehrere Pigmente und/oder einen oder mehrere Farbstoffe umfasst, wobei Pigmente in dem mindestens einen Bindemittel bzw. dessen Lösungsmittelbestandteil unlöslich sind, während Farbstoffe darin löslich sind. Der erfindungsgemäße Drucklack umfasst keine Farbmittel. Während bei Offsetdruckfarben gemäß dem Stand der Technik ganz überwiegend Pigmente als Farbmittel eingesetzt werden, wurde im Rahmen der Erfindung festgestellt, dass insbesondere auch mit löslichen Farbstoffen, die einen relativ großen Anteil der als Farbmittel geeigneten Lebensmittelzusatzstoffe ausmachen, gute Ergebnisse erzielt werden können.

Bei einer bevorzugten Ausführungsform der Erfindung umfasst die Offsetdruckfarbe als Farbmittel einen oder mehrere der folgenden Bestandteile, die in der oben genannten EG-Verordnung als Lebensmittelzusatzstoffe mit den E-Nummern E100 bis E180 aufgeführt sind:
Kurkumin, Riboflavine, Tartrazin, Chinolingelb, Gelborange S, echtes Karmin, Azorubin, Amaranth, Cochenillerot A, Erythrosin, Allurarot AC, Patentblau V, Indigotin, Brillantblau FCF, Chlorophylle, Chlorophylline, Kupferkomplexe der Chlorophylle und Chlorophylline, Grün S, Zuckerkulör, Sulfitlaugen-Zuckerkulör, Ammoniak-Zuckerkulör, Ammonsulfit-Zuckerkulör, Brillantschwarz BN, Pflanzenkohle, Braun HT, Carotin, Annatto, Capsanthin, Capsorubin, Lycopin, Beta-apo-8'-Carotinal, Lutein, Canthaxanthin, Betanin, Anthocyane, Calciumcarbonat, Titandioxid, Eisenoxide, Eisenhydroxide, Aluminium, Silber, Gold und Litholrubin BK.

Besonders bevorzugt sind unter diesen Farbmitteln Indigotin (E132), Brillantblau FCF (E133), Erythrosin (E127), Allurarot AC (E129), Tartrazin (E102), Gelborange S (E110) und Mischungen hiervon.

Ein wesentlicher Bestandteil des Bindemittels von Offsetdruckfarben oder -drucklacken sind Harzbestandteile, die für die eigentliche Bindung des oder der Farbmittel an den Bedruckstoff zuständig sind. Gemäß dem Stand der Technik werden als Harzbestandteile in der Regel synthetische oder halbsynthetische Polymere, insbesondere Alkydharze und phenolmodifizierte Kolophoniumharze, eingesetzt, die für einen direkten Kontakt mit Lebensmitteln aufgrund von gesundheitlich bedenklichen Komponenten prinzipiell nicht in Frage kommen.

Als Alternative zu den bisher verwendeten Harzbestandteilen umfasst das mindestens eine Bindemittel gemäß einer Ausführungsform der Erfindung ein oder mehrere unmodifizierte natürliche Harze. Das oder die Harze sind insbesondere ausgewählt aus den pflanzlichen Harzen Kolophonium, Wurzelharz, Tallharz, Mastix, Copal, Dammarharz, Sandarak und Terpenharzen, dem tierischen Harz Schellack und Mischungen hiervon. Kolophonium und Mastix sind gemäß Anlage 4 der ZZulV als Lebensmittelzusatzstoffe zugelassen, Schellack (E904) auch gemäß der oben genannten EG-Verordnung. Wurzelharz und Tallharz werden wie Kolophonium aus Koniferen gewonnen und können als dessen Varianten angesehen werden (Kolophonium im engeren Sinne wird dann als Balsamharz bezeichnet). Entsprechend ist auch bei Copal, Dammarharz, Sandarak und Terpenharzen, die eine ähnliche Zusammensetzung wie Kolophonium aufweisen, von einer gesundheitlichen Unbedenklichkeit auszugehen.

Alternativ oder zusätzlich umfasst das mindestens eine Bindemittel ein oder mehrere natürliche Polymere aus pflanzlichen Milchsäften. Derartige Polymere werden im Lebensmittelbereich bereits eingesetzt, und zwar insbesondere als Grundstoffe für die Herstellung von Kaugummi. Überraschenderweise weisen diese Polymere, bei denen es sich meistens um Polysaccharide oder Polyisoprene handelt, eine gute Eignung als Bindemittel in Offsetdruckfarben oder -drucklacken auf.

Das oder die Polymere sind bevorzugt ausgewählt aus Chicle, Naturkautschuk, Guttapercha und Konjak-Gummi. Bei Chicle handelt es sich um ein Xylanpolymer aus dem Milchsaft (Latex) des mittelamerikanischen Breiapfelbaums, welches schon seit langem zur Herstellung von Kaugummi verwendet wird. Naturkautschuk und Guttapercha (auch Gutta) sind Polyisoprene aus dem Kautschukbaum bzw. dem Guttaperchabaum, beide Stoffe sind in Anlage 4 der ZZulV als Kaumassen aufgeführt. Konjak-Gummi (E425) ist ein Polysaccharid aus Mannose und Glucose, welches aus den Wurzeln der Teufelszunge gewonnen wird.

Alternativ oder zusätzlich kann das mindestens eine Bindemittel auch einen oder mehrere synthetische Kautschuke umfassen, die ebenfalls für die Herstellung von Kaugummi zugelassen sind, insbesondere Butylkautschuk und/oder Styrol-Butadien-Kautschuk (jeweils in Anlage 4 der ZZulV aufgeführt).

Gemäß einer weiteren, besonders vorteilhaften Ausführungsform der Erfindung umfasst das mindestens eine Bindemittel alternativ oder zusätzlich ein oder mehrere Ester von Harzsäuren. Bei den Harzsäuren handelt es sich um die natürlichen Bestandteile der weiter oben angesprochenen pflanzlichen Harze, wobei die Harzsäuren insbesondere ausgewählt sind aus Abietinsäure, Neoabietinsäure, Pimarsäure, Lävopimarsäure, Palustrinsäure, Agathensäure, Illurinsäure und/oder Podocarpinsäure. Durch einen Veresterung der Harzsäuren können die Eigenschaften der erfindungsgemäßen Druckfarbe oder des Drucklacks gegenüber der Verwendung von unmodifizierten natürlichen Harzen als Bindemittel weiter verbessert werden.

Bei den erfindungsgemäß eingesetzten Estern von Harzsäuren sind die Harzsäuren vorzugsweise mit Glycerin, Pentaerythritol oder Methanol verestert. Diese Ester der an sich unbedenklichen Harzsäuren führen wiederum zu gesundheitlich unbedenklichen Reaktionsprodukten. Besonders bevorzugt sind dabei die Glycerinester der Harzsäuren.

Die Harzsäuren können in dem oder den Estern, die erfindungsgemäß als Bindemittel eingesetzt werden, auch dimerisiert oder polymerisiert sein.

Die Harzsäureester können im Rahmen der Erfindung aus einer oder mehreren isolierten Harzsäuren hergestellt werden. Die einfachere und daher bevorzugte Vorgehensweise besteht jedoch darin, dass der oder die Ester durch die Umsetzung von natürlichem Harz mit einem oder mehreren Alkoholen hergestellt werden. Ein Produkt, das durch die Veresterung der in natürlichem Kolophonium enthaltenen Harzsäuren hergestellt ist, wird dann z.B. als Kolophonester bezeichnet (in Anlage 4 der ZZulV aufgeführt).

Als weitere Modifikation ist es möglich, dass die Harzsäuren in dem oder den Estern zumindest teilweise hydriert sind. Hierdurch kann die Stabilität der Produkte erhöht werden, indem ihre Reaktivität herabgesetzt wird, insbesondere gegenüber einer unerwünschten Oxidation.

Verschiedene Ester von Harzsäuren sind zumindest in den USA für die Herstellung von Kaugummi zugelassen (siehe 21 CFR § 172.615), insbesondere die Glycerinester von Kolophonium, Tallharz oder Wurzelharz (letzteres auch E445), die Glycerinester von teilweise dimerisiertem Kolophonium, die Glycerinester von polymerisiertem Kolophonium, die Glycerinester von teilweise hydriertem Kolophonium oder Wurzelharz, die Pentaerythritolester von Kolophonium oder Wurzelharz, und die Pentaerythritolester von teilweise hydriertem Kolophonium oder Wurzelharz.

Im Gegensatz zu vielen bekannten Offsetdruckfarben oder -drucklacken enthält das Bindemittel gemäß der vorliegenden Erfindung insbesondere keine phenolmodifizierten Harze oder Ester von Harzsäuren mit phenolischen Verbindungen, da solche Komponenten, wie bereits oben erwähnt, nicht lebensmittelgeeignet sind.

Das mindestens eine Bindemittel der erfindungsgemäße Offsetdruckfarbe und des -drucklacks umfasst zusätzlich ein oder mehrere Lösemittel in Form von flüssigen hydrophoben Bestandteilen. Die Lösemittel werden in diesem Zusammenhang auch als Druckfarbenöle bezeichnet, sie müssen zum Lösen des oder der Harzbestandteile geeignet sein.

Im Hinblick auf das beim Offsetdruck üblicherweise verwendete Verfahren, bei dem zunächst ein hydrophiles Feuchtmittel auf die nicht druckenden Bereiche der Druckplatte aufgetragen wird, ist es wesentlich bevorzugt, wenn die Druckfarbe oder der Drucklack insgesamt hydrophob ist.

Wie eingangs erwähnt, sind für Offsetdruckfarben geeignete Lösemittel, die Lebensmittel oder Lebensmittelzusatzstoffe sind, grundsätzlich bekannt. Im Rahmen der vorliegenden Erfindung kann das oder die Lösemittel insbesondere ausgewählt sein aus pflanzlichen Ölen (z.B. Sonnenblumenöl oder Sojaöl), Fraktionen oder Bestandteilen von pflanzlichen Ölen, und synthetischen Triglyceriden von gesättigten oder ungesättigten C₄- bis C₃₀-Fettsäuren, insbesondere C₆- bis C₂₂-Fettsäuren. Synthetische Triglyceride entsprechen in ihrem Aufbau den Bestandteilen pflanzlicher Öle und sind daher als Lebensmittelzusatzstoffe ebenfalls unbedenklich. Bei Verwendung von längerkettigen Triglyceriden sollten die Fettsäuren zumindest teilweise ungesättigt sein, da die Triglyceride sonst einen zu hohen Schmelzpunkt aufweisen. Alternativ können gesättigte mittelkettige Triglyceride (MCT) mit C₆- bis C₁₄-Fettsäuren eingesetzt werden, beispielsweise Glycerintri(caprylat,caprat).

Alternativ oder zusätzlich zu Triglyceriden kann das oder die Lösemittel auch ausgewählt sein aus Propylenglykolestern von gesättigten oder ungesättigten C₄- bis C₃₀-Fettsäuren, insbesondere C₆- bis C₂₂-Fettsäuren. Diese sind als E474 zugelassen.

Weitere geeignete Lösemittel im Rahmen der Erfindung können ausgewählt sein aus Mono- oder Diglyceriden von gesättigten oder ungesättigten C₄- bis C₃₀-Fettsäuren, insbesondere C₆- bis C₂₂-Fettsäuren, sowie den Estern dieser Mono- und Diglyceride mit Genusssäuren, insbesondere mit Essigsäure, Milchsäure, Citronensäure, Weinsäure, Mono- und Diacetylweinsäure und Mischungen hiervon (zugelassen als E471 bzw. E472a bis E472f).

Schließlich kann auch Saccharoseacetatisobutyrat (E444) als eines der Lösemittel eingesetzt werden.

Im Hinblick auf den gewünschten hydrophoben Charakter der erfindungsgemäßen Offsetdruckfarbe oder des erfindungsgemäßen Offsetdrucklacks ist es bevorzugt, wenn das Lösemittel kein Wasser und keine niederen Alkohole enthält. Niedere Alkohole umfassen insbesondere die mit Wasser mischbaren Verbindungen Methanol, Ethanol und Propanol sowie das mäßig wasserlösliche Butanol.

Durch die Auswahl des oder der Lösemittel kann insbesondere auch eine für den Offsetdruck geeignete Viskosität der Druckfarbe oder des Drucklacks eingestellt werden. Bevorzugt weist die erfindungsgemäße Offsetdruckfarbe oder der erfindungsgemäße Offsetdrucklack eine Viskosität von 20 bis 200 Pa·s auf, insbesondere von 50 bis 100 Pa·s.

Neben den wesentlichen Bestandteilen des Bindemittels und (im Falle der erfindungsgemäßen Offsetdruckfarbe) des Farbmittels können weitere Bestandteile vorgesehen sein, um die Eigenschaften der Offsetdruckfarbe oder des -drucklacks zu optimieren. Diese Bestandteile, bei denen es sich ebenfalls um Lebensmittel oder Lebensmittelzusatzstoffe handelt, umfassen insbesondere Slip- bzw. Scheueradditive, Strukturadditive, Rheologieadditive, Füllstoffe und Antioxidantien.

Additive, die im Rahmen der Erfindung günstigerweise eingesetzt werden, sind insbesondere ausgewählt aus Traganth (E413), Carrageen (E407), Gummi arabicum (E414), Candelillawachs (E902), Carnaubawachs (E903), mikrokristallinen Wachsen (E905), nicht modifizierten und modifizierten Stärken (z.B. E1004 bis E1051), Paraffinen, Polyethylen, Polyisobutylen, Polyvinylestern von C₂- bis C₁₈-Fettsäuren und Mischungen hiervon (die Stoffe ohne E-Nummer sind in Anlage 4 der ZZulV aufgeführt).

Die erfindungsgemäße Offsetdruckfarbe oder der -drucklack kann ferner einen oder mehrere Füllstoffe umfassen, die ausgewählt sind aus Calciumcarbonat (E170), Siliciumdioxid (E551), Talkum (E553b), Aluminiumsilikat (E559) und Mischungen hiervon.

Schließlich kann die Druckfarbe oder der Drucklack ein oder mehrere Antioxidantien umfassen, die bevorzugt ausgewählt sind aus Ascorbinsäure, Ascorbylpalmitat, Ascorbylstereat, Isoascorbinsäure, Tocopherolen, Propyl-, Octyl- und Dodecylgallat, tert-Butylhydrochinon, Butylhydroxyanisol, Butylhydroxytoluol und Mischungen hiervon (siehe E300 bis E321). Durch den Zusatz von Antioxidantien kann insbesondere eine unerwünschte Oxidation von ungesättigten Harzsäuren, Harzsäureestern und/oder Fettsäureestern, die in dem oder der Bindemitteln enthalten sind, verhindert oder zumindest reduziert werden.

Die nachfolgenden Beispiele dienen der näheren Erläuterung der Erfindung.

### Beispiele

### 1. Herstellung von erfindungsgemäßen Offsetdrucklacken

Die Beispielrezepturen I bis IV gemäß der nachfolgenden Tabelle 1 umfassen lediglich Bindemittelkomponenten, d.h. Harzbestandteile und Lösemittel, bei denen es sich um Lebensmittel oder Lebensmittelzusatzstoffe handelt. Die Zusammensetzungen können als solche als erfindungsgemäße Offsetdrucklacke eingesetzt werden, oder mit einem oder mehreren Farbmitteln zu einer erfindungsgemäßen Offsetdruckfarbe kombiniert werden. Als Ausgangspunkt zur Herstellung einer Offsetdruckfarbe wird das Bindemittel auch als Firnis bezeichnet.

**Tabelle 1**

| **Komponente** | **Produktname** | **Hersteller** | **Gew.%** |
|---|---|---|---|
| Rezeptur I: | | | |
| Kolophonium | | TER HELL | 40,0 |
| Sojaöl | | Henry Lamotte | 60,0 |
| Rezeptur II: | | | |
| Glycerinester von Kolophonium | YserGum 115 | Euro-Yser | 50,0 |
| Glycerinmono- und -di(caprylat/caprat) | Capmul MCM | ABITEC | 30,0 |
| Kokosöl | | Henry Lamotte | 20,0 |
| Rezeptur III: | | | |
| Pentaerythritester von Kolophonium | YserGum 122 | Euro-Yser | 60,0 |
| Propylenglycoldi(caprylat/caprat) | Romulgin PGCC | Ecogreen | 40,0 |
| Rezeptur IV: | | | |
| Glycerinester von polymerisiertem Kolophonium | YserGum 212 | Euro-Yser | 50,0 |
| Sonnenblumenöl | | Gustav Heess | 50,0 |
| Rezeptur V: | | | |
| Glycerinester von Wurzelharz | Pinova Ester Gum 8BG | Pinova | 60,0 |
| Essigsäureester von Mono- und Diglyceriden | Radiamuls Acetem 2134 | Oleon | 36,0 |
| Calciumstearat | LIGA Calciumstearat CPR-2-V | Peter Greven | 4,0 |
| Rezeptur VI: | | | |
| Hydrierter | Nuroz HRGE 85E | Newport | 59,0 |
| Glycerinester | | Industries Ltd. | |
| Magnesiumstearat | LIGA Magnesiumstearat MF-2-V | Peter Greven | 4,0 |
| Sojalecithin | LECICO F 600 | LECICO | 37,0 |
| Rezeptur VII: | | | |
| Glycerinester von Kolophonium | YserGum 116 | Euro-Yser | 45,0 |
| Polysorbat 20 | Radiamuls Sorb 2137 | Oleon | 55,0 |
| Rezeptur VIII: | | | |
| Glycerinester von teilweise hydriertem Wurzelharz | Staybelite Ester 5 | Pinova | 50,0 |
| Citronensäureester von Mono- und Diglyceriden | Coris I | Lasenor | 50,0 |

### 2. Herstellung von erfindungsgemäßen Offsetdruckfarben

Zur Herstellung von erfindungsgemäßen Offsetdruckfarben entsprechend den Beispielrezepturen A bis D gemäß der nachfolgenden Tabelle 2 wurden die Drucklacke bzw. Firnisse I bis IV mit verschiedenen Farbmitteln, Additiven, Füllstoffen und Antioxidantien kombiniert.

**Tabelle 2**

| **Komponente** | **Gew. %** |
|---|---|
| Rezeptur A: | |
| Drucklack I | 72,5 |
| Brillantblau FCF (E133) | 22,0 |
| Calciumcarbonat (E170) | 4,0 |
| Butylhydroxytoluol (E321) | 0,5 |
| Carnaubawachs (E903) | 1,0 |

| Rezeptur B: | |
|---|---|
| Drucklack II | 76,0 |
| Chinolingelb (E104) | 20,0 |
| Talkum (E553b) | 3,0 |
| Candelillawachs (E902) | 1,0 |

| Rezeptur C: | |
|---|---|
| Drucklack III | 74,0 |
| Azorubin (E122) | 22,0 |
| Calciumcarbonat (E170) | 4,0 |
| Carnaubawachs (E903) | 1,0 |

| Rezeptur D: | |
|---|---|
| Drucklack IV | 74,5 |
| Allurarot AC (E129) | 20,0 |
| Calciumcarbonat (E170) | 4,0 |
| Butylhydroxyanisol (E320) | 0,5 |
| Carnaubawachs (E903) | 1,0 |

| Rezeptur E: | |
|---|---|
| Drucklack V | 70,0 |
| Braun HT (E155) | 20,0 |
| Mono- und Diglyceride von Speisefettsäuren (E471) | 9,0 |
| Carnaubawachs (E903) | 1,0 |

| Rezeptur F: | |
|---|---|
| Drucklack VI | 70,0 |
| Cochenillerot A (E124) | 20,0 |
| Essigsäureester von E471 (E472a) | 9,0 |
| Carnaubawachs (E903) | 1,0 |

| Rezeptur G: | |
|---|---|
| Drucklack IV | 35,0 |
| Drucklack V | 35,0 |
| Allurarorrot AC (E129) | 20,0 |
| Citronensäureester von E471 (E472c) | 8,5 |
| Butylhydroxyanisol (E320) | 0,5 |
| Carnaubawachs (E903) | 1,0 |

| Rezeptur H: | |
|---|---|
| Drucklack VI | 35,0 |
| Drucklack II | 35,0 |
| Cochenillerot A (E124) | 20,0 |
| Polyglycerin-Polyricinoleat (E477) | 8,5 |
| Butylhydroxyanisol (E320) | 0,5 |
| Carnaubawachs (E903) | 1,0 |

| Rezeptur I: | |
|---|---|
| Drucklack VII | 75,5 |
| Tartrazin (E102) | 20,0 |
| Butylhydroxyanisol (E320) | 0,5 |
| Calciumcarbonat (E170) | 4,0 |
| Carnaubawachs (E903) | 1,0 |

| Rezeptur J: | |
|---|---|
| Drucklack VIII | 75,5 |
| Indokarmin (E132) | 20,0 |
| Butylhydroxyanisol (E320) | 0,5 |
| Calciumcarbonat (E170) | 4,0 |
| Carnaubawachs (E903) | 1,0 |

Die Herstellung der Offsetdrucklacke und -farben erfolgte auf bekannte Weise mittels Drei-Walzen-Fertigung.

Die Viskosität (bei 23 °C und einer Scherrate von 1/10 s) liegt bei den Drucklacken vorzugsweise im Bereich von 10 bis 100 Pa·s und bei den Druckfarben im Bereich von 50 bis 250 Pa·s, die Zügigkeit liegt vorzugsweise im Bereich von 2 bis 8 Tack-Einheiten (Lacke) bzw. 6 bis 14 Tack-Einheiten (Farben). Die Zügigkeit wurde mit einem Inkomat (Fa. Prüfbau GmbH) gemessen (Messbedingungen: 30 °C, 200 rpm, 2 g Farbe/Lack). Diese rheologischen Daten können in bekannter Weise an die drucktechnischen Erfordernisse in Abhängigkeit von Bedruckstoff und Druckmaschine angepasst werden.

Mit den Offsetdruckfarben A bis D wurden auf einer Druckmaschine KBA Rapida 105+ (Fa. Koenig & Bauer AG) Druckmuster auf Frischfaserkarton mit einer Höchstgeschwindigkeit von 14.000 Bögen pro Stunde angefertigt. Dabei wurden sowohl lackierte als auch unlackierte Druckmuster erstellt.

In allen Fällen ergaben sich zufrieden stellende Eigenschaften hinsichtlich Trocknung, Lackhaftung, Scheuerfestigkeit und Weiterverarbeitung. Diese Parameter stellen die wesentlichen technischen Kriterien für Offsetdruckfarben für den Verpackungsdruck dar.

Die Beispiele belegen somit, dass gemäß der vorliegenden Erfindung Offsetdruckfarben und -drucklacke mit zufrieden stellenden drucktechnischen Eigenschaften hergestellt werden können, die als Bestandteile ausschließlich Lebensmittel oder Lebensmittelzusatzstoffe enthalten.

## Patentansprüche

1. Offsetdruckfarbe oder -drucklack, die/der für einen direkten Kontakt mit Lebensmitteln geeignet ist, umfassend mindestens ein Bindemittel und ggf. mindestens ein Farbmittel, wobei
- das mindestens eine Bindemittel (i) ein oder mehrere unmodifizierte natürliche Harze und/oder (ii) ein oder mehrere natürliche Polymere aus pflanzlichen Milchsäften und/oder (iii) einen oder mehrere synthetische Kautschuke und/oder (iv) einen oder mehrere Ester von Harzsäuren mit Glycerin, Pentaerythritol oder Methanol umfasst; wobei
- das mindestens eine Bindemittel ein oder mehrere Lösemittel in Form von flüssigen hydrophoben Bestandteilen umfasst, wobei das oder die Lösemittel ausgewählt sind aus (i) pflanzlichen Ölen, Fraktionen oder Bestandteilen von pflanzlichen Ölen, und synthetischen Triglyceriden von gesättigten oder ungesättigten C₄₋ bis C₃₀-Fettsäuren, oder aus (ii) Propylenglykolestern von gesättigten oder ungesättigten C₄₋ bis C₃₀-Fettsäuren, oder aus (iii) Mono- und Diglyceriden von gesättigten oder ungesättigten C₄₋ bis C₃₀-Fettsäuren sowie den Estern dieser Mono- und Diglyceride mit Genusssäuren; und wobei
- sämtliche Bestandteile der Offsetdruckfarbe oder des Offsetdrucklacks entweder Lebensmittel im Sinne der Verordnung (EG) Nr. 178/2002 des Europäischen Parlaments und des Rates oder Lebensmittelzusatzstoffe im Sinne der Verordnung (EG) Nr. 1333/2008 des Europäischen Parlaments und des Rates sind.

2. Offsetdruckfarbe oder -drucklack nach Anspruch 1, wobei die Lebensmittelzusatzstoffe in Anhang II der Verordnung (EG) Nr. 1333/2008 des Europäischen Parlaments und des Rates, geändert durch die Verordnung (EU) Nr. 1129/2011 der Kommission, oder in den Anlagen 1 bis 7 der deutschen Verordnung über die Zulassung von Zusatzstoffen zu Lebensmitteln zu technologischen Zwecken aufgeführt sind.

3. Offsetdruckfarbe nach Anspruch 1 oder 2, wobei die Offsetdruckfarbe als Farbmittel ein oder mehrere Pigmente und/oder einen oder mehrere Farbstoffe umfasst, die bevorzugt ausgewählt sind aus: Kurkumin, Riboflavine, Tartrazin, Chinolingelb, Gelborange S, echtes Karmin, Azorubin, Amaranth, Cochenillerot A, Erythrosin, Allurarot AC, Patentblau V, Indigotin, Brillantblau FCF, Chlorophylle, Chlorophylline, Kupferkomplexe der Chlorophylle und Chlorophylline, Grün S, Zuckerkulör, Sulfitlaugen-Zuckerkulör, Ammoniak-Zuckerkulör, Ammonsulfit-Zuckerkulör, Brillantschwarz BN, Pflanzenkohle, Braun HT, Carotin, Annatto, Capsanthin, Capsorubin, Lycopin, Beta-apo-8'-Carotinal, Lutein, Canthaxanthin, Betanin, Anthocyane, Calciumcarbonat, Titandioxid, Eisenoxide, Eisenhydroxide, Aluminium, Silber, Gold und Litholrubin BK.

4. Offsetdruckfarbe oder -drucklack nach einem der vorangehenden Ansprüche, wobei das oder die unmodifizierten natürlichen Harze ausgewählt sind aus Kolophonium, Wurzelharz, Tallharz, Mastix, Copal, Dammarharz, Sandarak, Terpenharzen, Schellack und Mischungen hiervon.

5. Offsetdruckfarbe oder -drucklack nach einem der vorangehenden Ansprüche, wobei das oder die natürlichen Polymere aus pflanzlichen Milchsäften ausgewählt sind aus Chicle, Naturkautschuk, Guttapercha und Konjak-Gummi, und/oder wobei das oder die synthetischen Kautschuke Butylkautschuk und/oder Styrol-Butadien-Kautschuk sind.

6. Offsetdruckfarbe oder -drucklack nach einem der vorangehenden Ansprüche, wobei das oder die Ester von Harzsäuren ausgewählt sind aus Estern von Abietinsäure, Neoabietinsäure, Pimarsäure, Lävopimarsäure, Palustrinsäure, Agathensäure, Illurinsäure und/oder Podocarpinsäure mit Glycerin, Pentaerythritol oder Methanol.

7. Offsetdruckfarbe oder -drucklack nach einem der vorhergehenden Ansprüche, wobei die Harzsäuren in dem oder den Estern dimerisiert oder polymerisiert sind, und/oder wobei der oder die Ester durch die Umsetzung von natürlichem Harz mit einem oder mehreren Alkohol hergestellt sind, und/oder wobei die Harzsäuren in dem oder den Estern zumindest teilweise hydriert sind.

8. Offsetdruckfarbe oder -drucklack nach einem der vorangehenden Ansprüche, wobei das Bindemittel keine phenolmodifizierten Harze oder Ester von Harzsäuren mit phenolischen Verbindungen enthält.

9. Offsetdruckfarbe oder -drucklack nach einem der vorangehenden Ansprüche, wobei die Druckfarbe oder der Drucklack bevorzugt insgesamt hydrophob ist.

10. Offsetdruckfarbe oder -drucklack nach einem der vorhergehenden Ansprüche, wobei die gesättigten oder ungesättigten Fettsäuren C₆- bis C₂₂-Fettsäuren sind.

11. Offsetdruckfarbe oder -drucklack nach einem der vorhergehenden Ansprüche, wobei die Genusssäuren ausgewählt sind aus Essigsäure, Milchsäure, Citronensäure, Weinsäure, Mono- und Diacetylweinsäure und Mischungen hiervon.

12. Offsetdruckfarbe oder -drucklack nach einem der vorhergehenden Ansprüche, wobei das Lösemittel kein Wasser und keine niederen Alkohole enthält.

13. Offsetdruckfarbe oder -drucklack nach einem der vorangehenden Ansprüche, wobei die Druckfarbe oder der Drucklack eine Viskosität von 20 bis 200 Pa·s aufweist, insbesondere von 50 bis 100 Pa·s.

14. Offsetdruckfarbe oder -drucklack nach einem der vorangehenden Ansprüche, ferner umfassend (i) ein oder mehrere Additive, die ausgewählt sind aus Traganth, Carrageen, Gummi arabicum, Candelillawachs, Carnaubawachs, mikrokristallinen Wachsen, nicht modifizierten und modifizierten Stärken, Paraffinen, Polyethylen, Polyisobutylen, Polyvinylestern von C₂- bis C₁₈-Fettsäuren und Mischungen hiervon, und/oder (ii) einen oder mehrere Füllstoffe, die ausgewählt sind aus Calciumcarbonat, Siliciumdioxid, Talkum, Aluminiumsilikat und Mischungen hiervon, und/oder (iii) ein oder mehrere Antioxidantien, die ausgewählt sind aus Ascorbinsäure, Ascorbylpalmitat, Ascorbylstearat, Isoascorbinsäure, Tocopherolen, Propyl-, Octyl- und Dodecylgallat, tert-Butylhydrochinon, Butylhydroxyanisol, Butylhydroxytoluol und Mischungen hiervon.

## Claims

1. An offset printing ink or printing varnish that is suitable for direct contact with foods, including at least one binder and where appropriate at least one colorant, wherein
- the at least one binder includes (i) one or more unmodified natural resins, and/or (ii) one or more natural polymers from vegetable latices, and/or (iii) one or more synthetic rubbers, and/or (iv) one or more esters of resin acids with glycerol, pentaerythritol or methanol; wherein
- the at least one binder includes one or more solvents in the form of liquid hydrophobic components, wherein the solvent or solvents are selected from (i) vegetable oils, fractions or components of vegetable oils, and synthetic triglycerides of saturated or unsaturated C4- to C30-fatty acids, or from (ii) propylene glycol esters of saturated or unsaturated C4- to C30-fatty acids, or from (iii) mono- and diglycerides of saturated or unsaturated C4- to C30-fatty acids, and esters of these mono- and diglycerides with edible acids; and wherein
- all the components of the offset printing ink or offset printing varnish are either food as defined in Regulation (EC) No 178/2002 of the European Parliament and of the Council or food additives as defined in Regulation (EC) No 1333/2008 of the European Parliament and of the Council.

2. The offset printing ink or printing varnish according to claim 1, wherein the food additives are listed in Annex II of Regulation (EC) No 1333/2008 of the European Parliament and of the Council, amended by Regulation (EC) No 1129/2011 of the Commission, or in Annexes 1 to 7 of the German Regulation on Permitted Additives in Food for Technological Purposes.

3. The offset printing ink according to claim 1 or 2, wherein the offset printing ink includes as the colorant one or more pigments and/or one or more dyes, which are preferably selected from: curcumin, riboflavins, tartrazine, quinoline yellow, Orange Yellow S, cochineal, azorubine, amaranth, Cochineal Red A, erythrosine, Allura Red AC, Patent Blue V, indigotine, Brilliant Blue FCF, chlorophylls, chlorophyllins, copper complexes of chlorophylls and chlorophyllins, Green S, plain caramel, caustic sulphite caramel, ammonia caramel, sulphite ammonia caramel, Brilliant Black BN, vegetable carbon, Brown HT, carotenes, annatto, capsanthin, capsorubin, lycopene, beta-apo-8'-carotenal, lutein, canthaxanthin, betanin, anthocyanins, calcium carbonate, titanium dioxide, iron oxides, iron hydroxides, aluminium, silver, gold and litholrubine BK.

4. The offset printing ink or printing varnish according to one of the preceding claims, wherein the unmodified natural resin or resins are selected from colophony, wood rosin, tall oil rosin, mastic, copal, dammar, sandarac, terpene resins, shellac and mixtures thereof.

5. The offset printing ink or printing varnish according to one of the preceding claims, wherein the natural polymer or polymers from vegetable latices are selected from chicle, natural rubber, gutta-percha and konjac; and/or wherein the synthetic rubber or rubbers are butyl rubbers and/or styrene/butadiene rubbers.

6. The offset printing ink or printing varnish according to one of the preceding claims, wherein the ester or esters of resin acids are selected from esters of abietic acid, neoabietic acid, pimaric acid, levopimaric acid, palustric acid, agathic acid, illuric acid and/or podocarpic acid with glycerol, pentaerythritol or methanol.

7. The offset printing ink or printing varnish according to one of the preceding claims, wherein the resin acids in the ester or esters are dimerised or polymerised, and/or wherein the ester or esters are obtained by reacting natural resin with one or more alcohols, and/or wherein the resin acids in the ester or esters are at least partly hydrogenated.

8. The offset printing ink or printing varnish according to one of the preceding claims, wherein the binder contains no phenol-modified resins or esters of resin acids with phenolic compounds.

9. The offset printing ink or printing varnish according to one of the preceding claims, wherein the printing ink or printing varnish is hydrophobic overall.

10. The offset printing ink or printing varnish according to one of the preceding claims, wherein the saturated or unsaturated fatty acids are C₆- to C₂₂-fatty acids.

11. The offset printing ink or printing varnish according to one of the preceding claims, wherein the edible acids are selected from acetic acid, lactic acid, citric acid, tartaric acid, mono- and diacetyl tartaric acid and mixtures thereof.

12. The offset printing ink or printing varnish according to one of the preceding claims, wherein the solvent contains no water and no lower alcohols.

13. The offset printing ink or printing varnish according to one of the preceding claims, wherein the printing ink or printing varnish has a viscosity of 20 to 200 Pa.s, in particular 50 to 100 Pa.s.

14. The offset printing ink or printing varnish according to one of the preceding claims, further including (i) one or more additives which are selected from tragacanth, carrageenan, gum arabic, candelilla wax, carnauba wax, microcrystalline waxes, unmodified and modified starches, paraffins, polyethylene, polyisobutylene, polyvinyl esters of C₂- to C₁₈-fatty acids and mixtures thereof, and/or (ii) one or more extenders which are selected from calcium carbonate, silicon dioxide, talc, aluminium silicate and mixtures thereof, and/or (iii) one or more antioxidants which are selected from ascorbic acid, ascorbyl palmitate, ascorbyl stearate, isoascorbic acid, tocopherols, propyl, octyl and dodecyl gallate, tert.-butyl hydroquinone, butylated hydroxyanisole, butylated hydroxytoluene and mixtures thereof.

## Revendications

1. Peinture pour une impression offset ou laque pour une impression offset qui est appropriée à un contact direct avec des aliments, comprenant au moins un liant et le cas échéant au moins un agent colorant, dans laquelle
- le au moins un liant comprend (i) une ou plusieurs résines naturelles non modifiées et/ou (ii) un ou plusieurs polymères naturels de sèves végétales et/ou (iii) un ou plusieurs caoutchoucs synthétiques et/ou (iv) un ou plusieurs esters d'acides résiniques avec de la glycérine, du pentaérythritol ou du méthanol ; dans laquelle
- le au moins un liant comprend un ou plusieurs solvants sous forme de composants hydrophobes liquides, le ou les solvants étant choisis parmi (i) les huiles végétales, fractions ou composantes d'huiles végétales et triglycérides synthétiques d'acides gras saturés ou insaturés en C₄ à C₃₀, ou parmi (ii) les esters de propylène glycol d'acides gras saturés ou insaturés en C₄ à C₃₀, ou parmi (iii) les mono- et diglycérides d'acides gras saturés ou insaturés en C₄ à C₃₀, ainsi que les esters de ces mono- ou diglycérides avec des acides alimentaires ; et dans laquelle
- tous les composants de la peinture pour une impression offset ou de la laque pour une impression offset sont des aliments conformément au règlement (CE) 178/2002 du Parlement Européen et du Conseil ou des additifs alimentaires conformément au règlement (CE) 1333/2008 du Parlement Européen et du Conseil.

2. Peinture pour une impression offset ou laque pour une impression offset selon la revendication 1, dans laquelle les additifs alimentaires figurent en annexe II du règlement (CE) 1333/2008 du Parlement Européen et du Conseil, amendé par le règlement (UE) 1129/2011 de la Commission, ou en annexes 1 à 7 du règlement allemand relatif à l'autorisation des additifs alimentaires à des fins technologiques.

3. Peinture pour une impression offset selon la revendication 1 ou 2, dans laquelle la peinture pour une impression offset comprend un ou plusieurs pigments et/ou une ou plusieurs substances colorantes à titre d'agents colorants, choisis de préférence parmi : la curcumine, la riboflavine, la tartrazine, le jaune de quinoline, le jaune orange S, le carmin véritable, l'azorubine, l'amaranthe, le rouge de cochenille A, l'érythrosine, le rouge allura AC, le bleu patenté V, l'indigo, le bleu brillant FCF, la chlorophylle, la chlorophylline, les complexes au cuivre de chlorphylle et de chlorophylline, le vert S, le caramel, le caramel au sulfite caustique, caramel à l'ammoniac, le caramel au sulfite d'ammonium, le noir brillant BN, le charbon végétal, le marron HT, le carotène, le rocou, la capsanthine, la capsorubine, le lycopène, le bêta-apo-8'-caroténal, la lutéine, la canthaxanthine, la bétanine, les anthrocyanes, le carbonate de calcium, le dioxyde de titane, les oxydes de fer, les hydroxydes de fer, l'aluminium, l'argent, l'or et la litholrubine BK.

4. Peinture pour une impression offset ou laque pour une impression offset selon l'une des revendications précédentes, dans laquelle le ou les résines naturelles non modifiées sont choisies parmi la colophane, la résine de bois, la résine de tall-oil, le mastic, le copal, la résine de dammar, le sandaraque, les résines terpéniques, le shellac, et des mélanges de ceux-ci.

5. Peinture pour une impression offset ou laque pour une impression offset selon l'une des revendications précédentes, dans laquelle le ou les polymères naturels de sèves végétales sont choisis parmi le chiclé, le caoutchouc naturel, la gutta-percha, et la gomme de konjac, et/ou dans laquelle le ou les caoutchoucs synthétiques sont le caoutchouc de butyle et/ou le caoutchouc de styrène-butadiène.

6. Peinture pour une impression offset ou laque pour une impression offset selon l'une des revendications précédentes, dans laquelle le ou les esters d'acides résiniques sont choisis parmi les esters d'acide abiétique, d'acide néoabiétique, d'acide pimarique, d'acide lévopimarique, d'acide palustrique, d'acide agathénique, d'acide illurique, et/ou d'acide podocarpinique avec de la glycérine, du pentaérythritol ou du méthanol.

7. Peinture pour une impression offset ou laque pour une impression offset selon l'une des revendications précédentes, dans laquelle les acides résiniques dans le ou les esters sont dimérisés ou polymérisés, et/ou dans laquelle le ou les esters sont préparés par conversion de la résine naturelle avec un ou plusieurs alcools, et/ou dans laquelle les acides résiniques dans le ou les esters sont au moins partiellement hydrogénés.

8. Peinture pour une impression offset ou laque pour une impression offset selon l'une des revendications précédentes, dans laquelle le liant ne contient aucune résine modifiée par un phénol ou aucun ester d'acides résiniques avec des composés phénoliques.

9. Peinture pour une impression offset ou laque pour une impression offset selon l'une des revendications précédentes, dans laquelle la peinture pour impression ou la laque pour impression est de préférence globalement hydrophobe.

10. Peinture pour une impression offset ou laque pour une impression offset selon l'une des revendications précédentes, dans laquelle les acides gras saturés ou insaturés sont des acides gras en C₆ à C₂₂.

11. Peinture pour une impression offset ou laque pour une impression offset selon l'une des revendications précédentes, dans laquelle les acides alimentaires sont choisis parmi l'acide acétique, l'acide lactique, l'acide citrique, l'acide tartrique, l'acide mono- et diacétyltartrique, et des mélanges de ceux-ci.

12. Peinture pour une impression offset ou laque pour une impression offset selon l'une des revendications précédentes, dans laquelle le solvant ne contient pas d'eau ni d'alcools inférieurs.

13. Peinture pour une impression offset ou laque pour une impression offset selon l'une des revendications précédentes, dans laquelle la peinture pour impression ou la laque pour impression présente une viscosité de 20 à 200 Pa·s, en particulier de 50 à 100 Pa·s.

14. Peinture pour une impression offset ou laque pour une impression offset selon l'une des revendications précédentes, comprenant en outre (i) un ou plusieurs additifs, choisis parmi la tragacanthe, la carraghénane, la gomme arabique, la cire de candellila, la cire de carnauba, les cires microcristallines, les amidons modifiés et non modifiés, les paraffines, le polyéthylène, le polyisobutylène, les esters polyvinyliques d'acides gras en C₂ à C₁₈ et des mélanges de ceux-ci, et/ou (ii) un ou plusieurs agents de charge, choisis parmi le carbonate de calcium, le dioxyde de silicium, le talc, le silicate d'aluminium et des mélanges de ceux-ci et/ou (iii) un ou plusieurs antioxydants, choisis parmi l'acide ascorbique, le palmitate d'ascorbyle, le stéarate d'ascorbyle, l'acide isoascorbique, les tocophérols, le gallate de propyle, d'octyle et de dodécyle, l'hydroquinone de tert-butyle, l'hydroxyanisol de butyle, l'hydroxytoluène de butyle et des mélanges de ceux-ci.
